# EUROPEAN PATENT APPLICATION

(11) **EP 3 480 481 A1**
(43) Date of publication of application: **08.05.2019**
(21) Application number: 18201801.0
(22) Date of filing: 22.10.2018
(51) Int. Cl.: F16D 13/38, F16D 21/06, F16D 23/12

(54) **A DOUBLE CLUTCH ACTIVATION MECHANISM**

(30) Priority: 01.11.2017 TR 201716967
(71) Applicant: Ford Otomotiv Sanayi Anonim Sirketi, 34885 Sancaktepe/Istanbul (TR)
(72) Inventor: OZCAN, Sezgin, 34885 ISTANBUL (TR)
(74) Representative: Dericioglu, E. Korhan

(57) **Abstract**

Double clutch activation mechanism (1) comprising an actuator with a rotary element (8.2) which has a cam (8.2.1) mounted on its surface. The rotary element can be rotated on both directions and in on direction it applies force on a first force transmitter lever (8.3) and in the second direction it applies force to a second force transmitter lever (8.4). Said first and second force transmitter levers apply (8.3) a force to the first and second clutch.

## Description

### Technical Field

The invention is related to a double clutch activation mechanism that provides to perform two functions with one drive in double clutch systems of the vehicles.

### Prior Art

Nowadays instead of conventional tork convertor clutch method, more effective dry clutch methods are used in automatic vehicles. Thus, fuel economy is not affected in a negative way. Said dry clutch methods are used as two different clutch applications, namely single clutch and double clutch.

In single clutch method, one of the dry clutch methods, instead of engaging and disengaging conventional clutch pressure and plate via a pedal by the driver of the vehicle, the same is performed by using a mechanism electronically controlled by vehicle control unit. However single clutch method used herein reflects motor clutch movement during shifts and gear change is performed in a longer time. In order to eliminate this lack of comfort of the one clutch method, the double clutch method is more preferred and it is used frequently in today's technics.

In double clutch automatic vehicles, specifically two methods are used for engaging each clutch. In one of these said methods, pressurized hydraulic fluid is directed to the piston that is to drive relevant lever arm for engaging the preferred clutch disc with electronically controlled valves. Hydraulic fluid used in this application is used via drive continuously received from the vehicle motor and said fluid has to be within a determined pressure level continuously.

Another method is electromechanic control system. Lever arm is pushed via electromechanic control system and thus preferred clutch disk is activated. There is a servo motor arrangement for each clutch within this method. By pushing clutch pressure plate via inflow, servo motor connected to the relevant lever arm provides the preferred clutch to engage.

Frequent failures occur due to complicated control methods in double clutch automatic vehicles with the abovementioned operation systems. Particularly in traffic jam, due to frequent gear change, systems with hydraulic valve and electromechanic control, continuously activate and inactivate different valves or servo motor for engaging the relevant clutch pressure plate and disengaging the other one. This circumstance triggers overheating of the working elements. More importantly, it is required to avoid from engaging both clutch pressure plates of the two clutches at the same time and during shifting from one clutch to other, to keep activation mechanisms under excellent control. This requirement makes the system very complicated in double clutch automatic vehicles. When the system is more complicated, there is more possibility and risk to encounter breakdown and failure. Simplifying the mechanisms both decreases the production complexity and also minimizes the failure risks.

In the known state of the art, a double clutch mechanism is described in US Patent Document No US6012561 (A). In US Patent Document No US6012561 (A), clutch sets are activated with two electro mechanical motors. The electric motor, on the cam plate, provides selection feature by turning the activation links. In addition, the other motor is used for providing shifts. There is a driving element in the present invention. The rotary element contained in said driving element, could rotate clockwise or anticlockwise. By virtue of the cam in the rotary element that uses force to the first force transmitter and the second force transmitter, the first force transmitter and the second force transmitter starts to move.

In the known state of the art, in US Patent Document No US2007240530 (A1), a double clutch system is included. In this document, the cam forms (6A-6B) driven via the electric motor for shifting the clutch sets is provided by the positioned plate. Rotation process is performed by using a worm gear. By means of these forms, the clutches do not engage at the same time and the system is simplified. In the present invention, when the rotary element cam within the activator is aligned with the first force transmitter, it applies force to the first force transmitter and thus it moves the first motion transmitter in the axial direction. When the cam is aligned with the second force transmitter, it moves the second motion transmitter in the axial direction.

The Chinese Patent Document No CN105114583 (A) included in the known state of the art, describes a double clutch transmission. In this application, it turns push-pull arm moving the clutch forks of the electric motor. With this application, it is stated that complexity decreases and 10% increase is provided in efficiency. In the first force transmitter within document of the present invention, there is a first groove. Said first groove is preferably formed by an opening formed according to the diameter size of the first motion transmitter and extensions formed in both sides of said opening. Thus, when a force is applied via the cam to the first force transmitter, transmitting this force to the first motion transmitter is performed in an easier manner.

### Aims of the Invention

The aim of this present invention is to perform double clutch activation mechanism that provides two functions with one drive.

Another aim of the present invention is to realize the double clutch activation mechanism transmitting drive to the first force transmitter and the second transmitter via the cam within the rotary element.

### Brief Description of the Invention

Realized in order to achieve the aim of this present invention, in the double clutch activation mechanism defined in the first claim and the other claims dependent to this claim, two functions with one drive is provided via the activator. Said activator is composed of a body, a rotary element, a first force transmitter, a second force transmitter and a flexible element providing the first force transmitter and the second force transmitter to return back to their first position. There is a cam in said rotary element. Said cam makes a circular movement together with the rotary element. When the cam is aligned with the first force transmitter, it applies force to the first motion transmitter and thus it provides the first motion transmitter to move axially, when it is aligned with the second force transmitter, it applies force to the second motion transmitter and it provides the second motion transmitter to move axially.

### Detailed Description of the Invention

The double clutch activation mechanism provided in order to achieve the aim of this present invention is shown within the attached drawings, wherein:

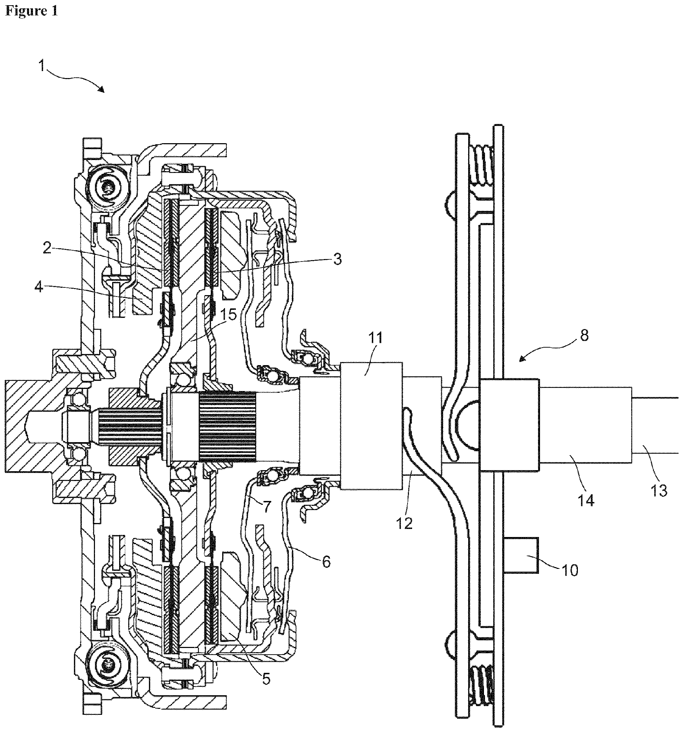

**Figure 1** is a side sectional view of the first position of the double clutch activation mechanism.

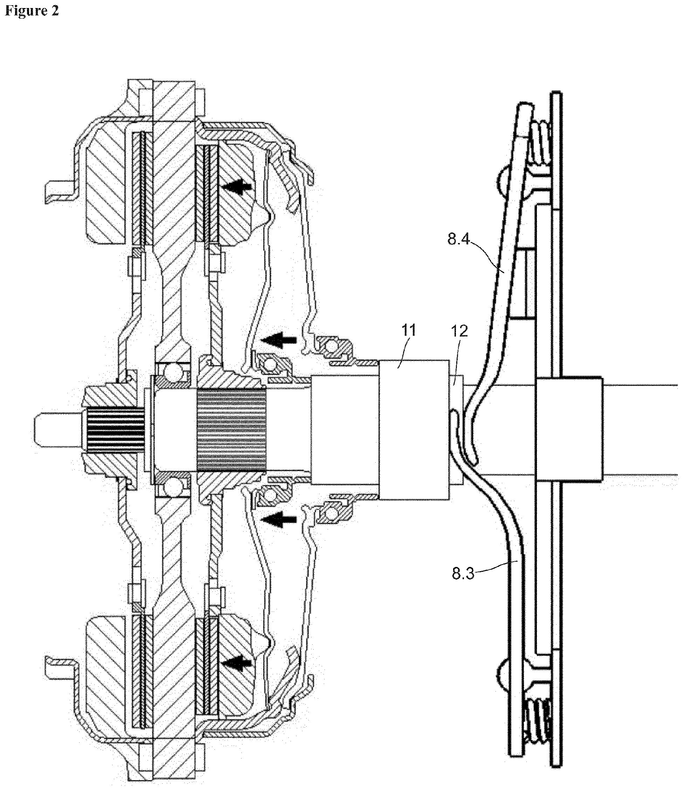

**Figure 2** is a side sectional view of the position where the cam included in the double clutch activation mechanism drives the second force transmitter.

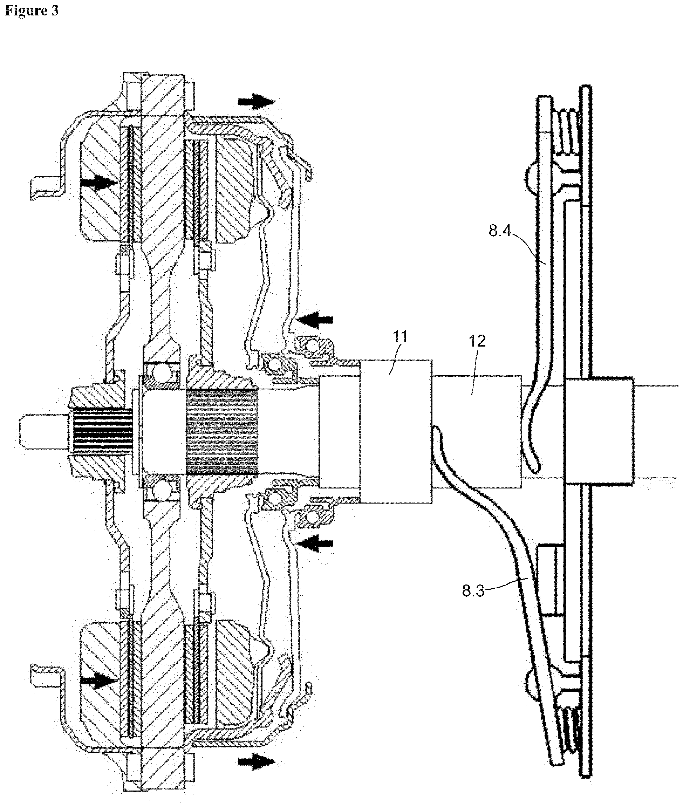

**Figure 3** is a side sectional view of the position where the cam included in the double clutch activation mechanism drives the first force transmitter.

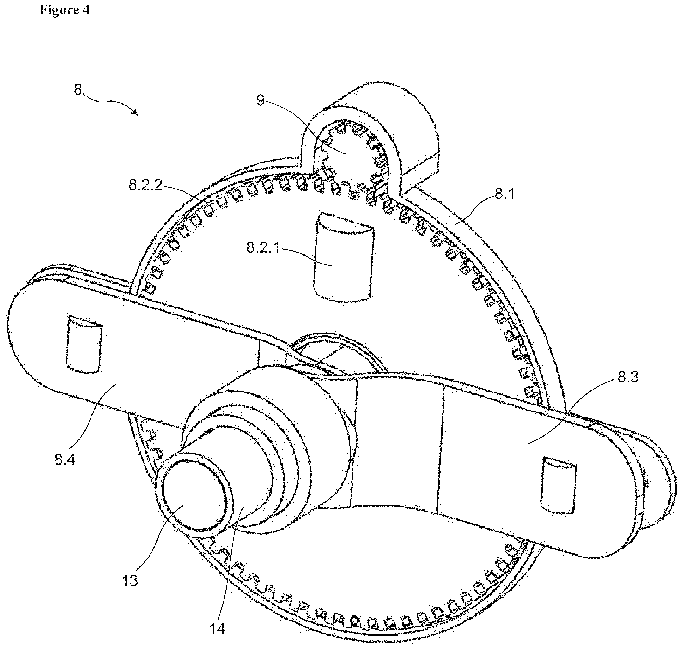

**Figure 4** is a perspective view of the activator.

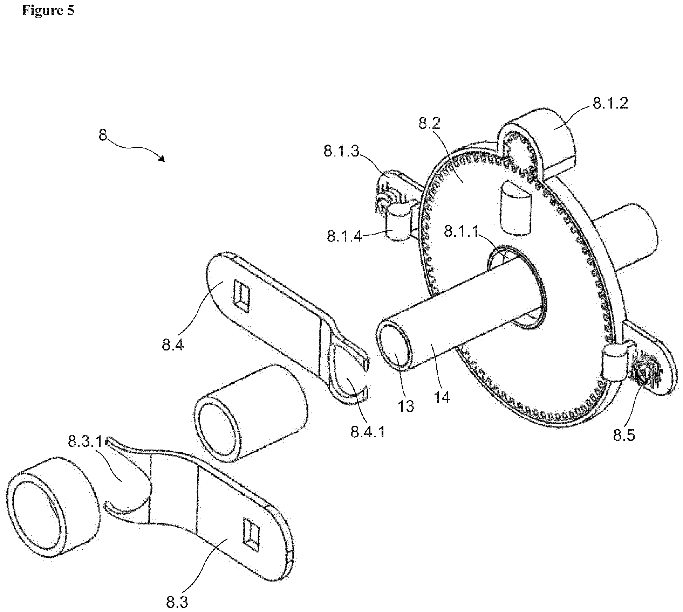

**Figure 5** is an exploded perspective view of the activator.

All parts within the drawings are enumerated one by one, and the numbers correspond to the following.
**1.** Double clutch activation mechanism
**2.** First clutch
**3.** Second clutch
**4.** First pressure plate
**5.** Second pressure plate
**6.** First spring
**7.** Second spring
**8.** Actuator
   **8.1.** Body
      **8.1.1.** Center hole
      **8.1.2.** Housing
      **8.1.3.** Extension
      **8.1.4.** Locker
   **8.2.** Rotary element
      **8.2.1.** Cam
      **8.2.2.** Gear
   **8.3.** First force transmitter
      **8.3.1.** First groove
   **8.4.** Second force transmitter
      **8.4.1.** Second groove
   **8.5.** Flexible element
**9.** Driving element
**10.** Position sensor
**11.** First motion transmitter
**12.** Second motion transmitter
**13.** Inner Shaft
**14.** Outer shaft
**15.** Middle disc

The double clutch activation mechanism (1) that provides to perform two functions with one drive within double clutch systems of the vehicles comprises the following:
- at least one first clutch (2) transmitting tork to the preferred gears in the gearbox,
- at least one second clutch (3) transmitting tork transfer to the other gears that the first clutch (2) in the gear box does not transmit tork,
- at least one first pressure plate (4) that fixes the first clutch (2) to the flywheel and transmits the motor tork from the first clutch (2) to the drive wheels,
- at least one second pressure plate (5) that fixes the second clutch (3) to the flywheel and transmits the motor tork from the second clutch (3) to the drive wheels,
- at least one first spring (6) that provides clutching of the first pressure plate (4),
- at least one second spring (7) that provides clutching of the second pressure plate (5),
- an actuator (8) wherein it comprises a rotary element (8.2) rotatable with preferred speeds around its own axis clockwise or anticlockwise and where at least one cam (8.2.1) is formed on its one surface,
   - a first force transmitter (8.3) transmitting force via received drive from the cam (8.2.1) to the first motion transmitter (11) capable of moving in the direction of central axis of the rotary element (8.2),
   - a second force transmitter (8.4) transmitting force via received drive from the cam (8.2.1) to the second motion transmitter (12) capable of moving in the direction of the central axis of the rotary element (8.2) and,
   - the position of the cam (8.2.1) formed in the rotary element (8.2) is changeable with the rotation of the rotary element (8.2) around its own axis, during said position change according to the position of the cam (8.2.1) the actuator (8) applies force only to one of the first force transmitter (8.3) or the second force transmitter (8.4) via cam (8.2.1) in the direction of the central axis and in the direction of the first clutch (2) and the second clutch (3).

In one embodiment of the invention, in a double clutch system (1), there are one first clutch (2) and one second clutch (3). Said first clutch (2) transmits tork transfer to only determined gears (e.g., 1-3-5-7 gears) within the gearbox. The first clutch (2) included within this embodiment of the invention is preferably a clutch disc. There is also a second clutch (3) within this embodiment of the invention. Said second clutch (3) clutches the gears (e.g., 2-4-6-R gears) left unclutched by the first clutch (2) and thus it transmits tork transfer. The second clutch (3) included within this embodiment of the invention is preferably a clutch disc.

In another embodiment of the invention, in a double clutch system (1) in one embodiment of the invention, there are one first pressure plate (4) and one second pressure plate (5). Said first pressure plate (4) is in in connection with the first clutch (2), it fixes the first clutch (2) to the flywheel and it provides the transmission of the motor tork to the drive wheels via the first clutch (2). There is also a second pressure plate (5) within this embodiment of the invention. Similar to the first pressure plate (4) said second pressure plate (5) is in connection with the second clutch (3). Said second pressure plate (5) is in in connection with the second clutch (3), it fixes the second clutch (3) to the flywheel and it provides the transmission of the motor tork to the drive wheels via the second clutch (3).

In another embodiment of the invention, besides the first pressure plate (4) and the second pressure plate (5), there are also a first spring (6) and a second spring (7). This first spring (6) mentioned in this embodiment of the invention is in connection with the first pressure plate (4), provides clutching of the first pressure plate (4). Similarly, the second spring (7) is in connection with the second pressure plate (5), provides clutching of the second pressure plate (5).

In another embodiment of the invention, in the double clutch system (1), where the first spring (6) and the second spring (7) are preferred , there is an actuator (8) for providing motion. As for said actuator (8), it applies force to the first motion transmitter (11) and the second motion transmitter (12) in the direction of the central axis of the actuator (8) and in the direction of the first clutch (2) and the second clutch. There is preferably a body (8.1) in the actuator (8) within this embodiment of the invention. As the housing of the actuator (8), said body (8.1) stays rigidly in its own position. There is a center hole (8.1.1) formed according to a size where an inner shaft (13) and an outer shaft (14) located in the middle of the body (8.1) included within this embodiment of the invention, could pass. The body (8.1) is located around the inner shaft (13) and the outer shaft (14) via said center hole (8.1.1). There is also a housing (8.1.2) apart from center hole (8.1.1) within the body (8.1). Preferably formed at the top of the body (8.1), said housing (8.1.2) protects the driving element (9). There are extensions (8.1.3) on each part of the two different sections of the body (8.1) located with preferably one hundred and eighty degrees angle in respect to each other. The angle between the extension (8.1.3) included within this embodiment of the invention and the housing (8.1.2) is ninety degrees. As the angle between the housing (8.1.2) and the extensions (8.1.3) may be ninety degrees within this embodiment of the invention, any preferred angle configurations may be used in different embodiments of the invention. There is also a locker (8.1.4) in the body (8.1) of this embodiment. Said locker (8.1.4) is preferably formed on the extension (8.1.3) that provides connection of the first force transmitter (8.3) and second force transmitter (8.4) with the body (8.1).

In another embodiment of the invention, there is also a rotary element (8.2) in the actuator (8). Said rotary element (8.2) has a structure such that it could rotate around the axis passing through the center of the center hole (8.1.1) clockwise or anticlockwise. Rotary element (8.2) within this embodiment of the invention has a cylindrical form with a wall thickness. In addition, there are gears (8.2.2) around the rotary element (8.2). Moreover, there is a cam (8.2.1) on the side of the first clutch (2) and the second clutch (3) of the rotary element (8.2). The cam (8.2.1) within this embodiment of the invention is preferably formed such that it has a structure of semi-cylindrical geometry, is formed on the surface where the first clutch (2) and the second clutch (3) of the rotary element (8.2) are located. Radial distance of the cam (8.2.1) to the central axis of the rotary element (8.2) could be a preferred distance. The cam (8.2.1) within this embodiment of the invention is located slightly further from the halfway of the radius of the rotary element (8.2). The cam (8.2.1) is rigidly fixed to the rotary element (8.2). Therefore, during the rotation of the rotary element (8.2) around its own axis, the cam (8.2.1) also moves together with the rotary element (8.2).

In another embodiment of the invention, there is also a first force transmitter (8.3) and a second force transmitter (8.4) in the actuator (8). The first force transmitter (8.3) and the second force transmitter (8.4) are connected to the body (8.1) only via the locker (8.1.4). Moreover the first force transmitter (8.3) within this embodiment of the invention is connected with the first motion transmitter (11), the second force transmitter (8.4) is connected with the second motion transmitter (12). There is a first groove (8.3.1) on one side of the first force transmitter (8.3) within this embodiment of the invention where it is connected with the first motion transmitter (11). Said first groove (8.3.1) is formed in order to transmit the force received from the first force transmitter (8.3) to the first motion transmitter (11) in a straight manner. The first groove (8.3.1) is preferably composed of an opening with a diameter equal to the diameter of the first motion transmitter (11) and extensions on both sides of this said opening. Thus, the force created in the first force transmitter (8.3) is transmitted to the first motion transmitter (11) without any loss. There is similarly a second groove (8.4.1) in the second force transmitter (8.4). Said second groove (8.4.1) is preferably composed of an opening with a diameter equal to the diameter of the second motion transmitter (12) and extensions on both sides of this said opening. Thus, the force created in the second force transmitter (8.4) is transmitted to the second motion transmitter (12) without any loss. On the other side of the first force transmitter (8.3) in respect to the locker (8.1.4) where the first groove (8.3.1) does not exists, there is a flexible element (8.5). When the first force transmitter (8.3) is in stationary position, there will be no force in the push or pull direction of the flexible element (8.5). However when a force is exerted upon the first force transmitter in respect to its rotation around the axis of the locker (8.1.4), flexible element (8.5) also exerts force parallel to said force upon the first force transmitter (8.3). The second force transmitter (8.4) similar to the first force transmitter (8.3) has a connection with the second element (8.5).

In another embodiment of the invention, the drive of the first force transmitter (8.3) and the second force transmitter (8.4) is realized with applying a force to the first force transmitter (8.3) and the second force transmitter (8.4) via the cam (8.2.1) as a result of the rotation of the rotary element (8.2). In case of the rotation of the rotary element (8.2), the cam (8.2.1) also makes an angular movement together with the rotary element (8.2). As a result of this motion, in case it comes into contact with the first force transmitter (8.3), it forces the side of the first force transmitter (8.3) wherein the first groove (8.3.1) is located, to apply force in the first motion transmitter (11) direction and thus the side of the first groove (8.3.1) is enabled to move. In case the cam (8.2.1) does not contact to the first force transmitter (8.3), due to the pushing force via the cam (8.2.1) in the flexible element (8.5), the first force transmitter (8.3) return back to its first position. Said process occurs similarly for the second force transmitter (8.4).

In another embodiment of the invention, in the double clutch activation mechanism (1), the rotation of the rotary element (8.2) around its own axis in a preferred range and velocity is provided by the driving element (9). The driving element (9) within this embodiment of the invention is preferably a servo motor. There are gears around said driving element (9) similar to the rotary element (8.2).

In another embodiment of the invention, in the double clutch activation mechanism (1), there is a position sensor (10) detecting the position of the rotary element (8.2) depending upon time. Said position sensor (10) is a sensor that detects current position of the rotary element (8.2) instantly and measures the location of the rotary element (8.2) continuously.

In another embodiment of the invention, in the double clutch activation mechanisms (1), there are one first motion transmitter (11) and one second motion transmitter (12) in order to transmit the drive via the actuator (8). One side of the first motion transmitter (11) within this embodiment of the invention is connected with the first groove (8.3.1) located in the first force transmitter, the other side is connected with the first spring (6). Similarly one side of the second motion transmitter (12) is connected with the second groove (8.4.1) located in the second force transmitter (8.4), the other side is connected with the second spring (7). During the rotation of the rotary element (8.2) around its own axis, in case the cam (8.2.1) overlaps the first force transmitter (8.3), the first motion transmitter (11) moves in an axial direction, in case it overlaps the second force transmitter (8.4), the second motion transmitter (12) moves in an axial direction. In addition to this, in case the cam (8.2.1) in the rotary element (8.2) does not contact to any of the first force transmitter (8.3) or the second force transmitter (8.4), the first motion transmitter (11) and the second force transmitter (12) return back to their first positions.

In another embodiment of the invention, the operation of the double clutch activation mechanism (1) is performed as the following. Said double clutch activation mechanism (1) is designed in order to perform two functions by using only one driving element (9) in the automotive industry. In order to achieve this function, the rotary element (8.2) on which there is a cam (8.2.1), makes a rotation movement in respect to the driving element (9) via gears (8.2.2). When the driving element (9) is operated with preferably an electrical flow, rotary element (8.2) also rotates. As a result of the rotary movement, the cam (8.2.1) on the rotary element (8.2) follows a circular route and it aligns with the first force transmitter (8.3) and second force transmitter (8.4) connected with the body of the transmission and it ensures the movement of the one that it is aligned with. Since the first force transmitter (8.3) and the second force transmitter (8.4) within this embodiment of the invention are located mutually, when the cam (8.2.1) moves the first force transmitter (8.3), the second force transmitter (8.4) remains stable, when it moves the second force transmitter (8.4) then the first force transmitter (8.3) remains stable. For example when the cam (8.2.1) in the rotary element (8.2) is aligned with the second force transmitter (8.4), when it rotates with a hundred and eighty degrees, while it moves the first force transmitter (8.3), the second force transmitter (8.4) is returned back to the first position by the flexible element (8.5). The same process is repeated when the rotary element (8.2) is rotated in the same direction. In this embodiment of the invention, the first groove (8.3.1) located in the first force transmitter (8.3) applies force to the first motion transmitter (11), the second groove (8.4.1) located in the second force transmitter (8.4) applies force to the second motion transmitter (12). When the first force transmitter (8.3) is activated via cam (8.2.1), the first motion transmitter (11) ensures to stretch the first spring (6) that is in contact in the first motion transmitter (11). The stretched first spring (6) compressed the first clutch (2) between the middle disc (15) directly connected to the motor and the first pressure plate (4), and forces it to rotate with the same speed of the motor. The first clutch (2) started to rotate with the same speed of the motor, by rotating the inner shaft (13), it ensures to rotate the gears (e.g., 1, 3, 5, 7) connected within the gearbox with the same speed of the motor. By selecting the appropriate one among these gears via the control unit, required tork transformation is performed. Together with moving the second force transmitter (8.4) via the cam (8.2.1), the second spring (7) is stretched by pushing the second force transmitter (8.4). The stretched second spring (7) compressed the second clutch (3) between the middle disc (15) directly connected to the motor and the second pressure plate (5), and forces it to rotate with the same speed of the motor. The first clutch (2) started to rotate with the same speed of the motor, by rotating the outer shaft (14), it ensures to rotate the gears (e.g., 2, 4, 6, R) connected within the gearbox with the same speed of the motor. Together with this connection, the tork is transmitted from the motor over the second clutch (3) via the outer shaft (14) to the gearbox and by selecting the appropriate gears in the outer shaft (14) via the control unit, required tork transmission is performed. In order to fix the cam (8.2.1) on the rotary element (8.2) in the preferred location in respect to position of the first force transmitter (8.3) or the second force transmitter (8.4), position sensor (10) sends feedback signal to the control unit in order to cut the electrical flow sent to the driving element (9) in respect to the reference points on the rotary element (8.2).

In practice, the speed of shifting changes according to the cycle of the driving element (9), gear ratio between the driving element (9) and the rotary element (8.2) and the number of cams (8.2.1). When we step up or down the gear, before changing the clutch, the next gear coupling is prepared previously and the speed of shifting is achieved only between the period that passes between disconnecting from one clutch and connecting to another clutch. This function is achieved during the half tour rotation of the rotary element (8.2) having only one cam (8.2.1).

## Claims

1. Providing two functions with one drive in the double clutch systems of the vehicles basically comprises the following:
- at least one first clutch (2) transmitting tork to the preferred gears in the gearbox,
- at least one second clutch (3) transmitting tork transfer to the other gears that the first clutch (2) in the gear box does not transmit tork,
- at least one first pressure plate (4) that fixes the first clutch (2) to the flywheel and transmits the motor tork from the first clutch (2) to the drive wheels,
- at least one second pressure plate (5) that fixes the second clutch (3) to the flywheel and transmits the motor tork from the second clutch (3) to the drive wheels,
- at least one first spring (6) that provides clutching of the first pressure plate (4),
- at least one second spring (7) that provides clutching of the second pressure plate (5), and **characterized by**
- an actuator (8) which comprises a rotary element (8.2) rotatable with preferred speeds around its own axis clockwise or anticlockwise and where at least one cam (8.2.1) is formed on its one surface,
• a first force transmitter (8.3) transmitting force via received drive from the cam (8.2.1) to the first motion transmitter (11) capable of moving in the direction of central axis of the rotary element (8.2),
• a second force transmitter (8.4) transmitting force via received drive from the cam (8.2.1) to the second motion transmitter (12) capable of moving in the direction of the central axis of the rotary element (8.2) and,
• the position of the cam (8.2.1) formed in the rotary element (8.2) is changeable with the rotation of the rotary element (8.2) around its own axis, during said position change according to the position of the cam (8.2.1) the actuator (8) applies force only to one of the first force transmitter (8.3) or the second force transmitter (8.4) via cam (8.2.1) in the direction of the central axis and in the direction of the first clutch (2) and the second clutch (3).

2. A double clutch activation mechanism (1) according to claim 1, **characterized in that** in case the first spring (6) and the second spring (7) is preferred, in order to provide its motion, the actuator (8) applies force to the first motion transmitter (11) and the second motion transmitter (12) in the direction of the center axis of the inner shaft (13) and in the direction of the first clutch (2) and the second clutch (3).

3. A double clutch activation mechanism (1) according to claim 1, **characterized in that** the actuator (8) has a center hole (8.1.1) opened with a size wherein the inner shaft (13) and the outer shaft (14) could pass through, a housing (8.1.2) protecting the driving element (9), a body (8.1) having two extensions (8.1.3) located in two different sides preferably located with an angle of one hundred and eighty degrees in respect to each.

4. A double clutch activation mechanism (1) according to claim 1, **characterized in that** the actuator (8) has a rotary element (8.2), having a structure such that it could rotate around the axis passed through the center hole (8.1.1) clockwise or anticlockwise, comprising a cam (8.2.1) formed for applying force to the first force transmitter (8.3) and the second force transmitter (8.4) on the side of the first clutch (2) and the second clutch (3).

5. A double clutch activation mechanism (1) according to claim 1, **characterized in that** the actuator (8) has the first force transmitter (8.3) having a first groove (8.3.1) formed for transmitting the force exactly to the first motion transmitter (11), received from the first force transmitter (8.3) that is only connected to the body (8.1) via the locker (8.1.4) and connected with the first motion transmitter (11).

6. A double clutch activation mechanism (1) according to claim 1, **characterized in that** the actuator (8) has a second force transmitter (8.4) having a second groove (8.4.1) formed for transmitting the force exactly to the second motion transmitter (12), received from the second force transmitter (8.4) that is only connected to the body (8.1) via the locker (8.1.4) and connected with the second motion transmitter (12).

7. A double clutch activation mechanism (1) according to claim 1, **characterized in that** the actuator (8) has a flexible element (8.5) located on the other side of the first force transmitter (8.3) in respect to the locker (8.1.4) where the first groove (8.3.1) does not exist and when the first force transmitter (8.3) is stationary that does not create any force in the direction of push or pull.

8. A double clutch activation mechanism (1) according to claim 1, **characterized in that** the actuator (8) has a flexible element (8.5) that applies force in a parallel direction via said force to the first force transmitter (8.3) in case a force is applied to the first force transmitter (8.3) upon the rotation around the axis of the locker (8.1.4).

9. A double clutch activation mechanism (1) according to claim 4, **characterized in that** the cam (8.2.1) makes an angular motion together with the rotary element (8.2) in case the rotary element (8.2) rotates, as a result of this said motion in case it contacts to the first force transmitter (8.3), by forcing the side of the first force transmitter (8.3) with the first groove (8.3.1) in the direction of the first motion transmitter (11) to apply force, it provides the movement of the side of the first force transmitter (8.3) with the first groove (8.3.1).

10. A double clutch activation mechanism (1) according to claim 4, **characterized in that** the cam (8.2.1) provides the movement of the second force transmitter (8.4) with the second groove (8.4.1) by forcing the side of the second force transmitter (8.4) with the second groove (8.4.1) in the direction of the second motion transmitter (12) in case it contacts to the second force transmitter (8.4).

11. A double clutch activation mechanism (1) according to claim 1, **characterized in that** the driving element (9) is a servo motor providing the rotation of the rotary element (8.2) around its own axis in a preferred ration and speed.

12. A double clutch activation mechanism (1) according to claim 1, **characterized in that** the position sensor (10) detects the position of the rotary element (8.2) in respect to time, also as a sensor it continuously measures the location of the rotary element (8.2) by determining the current location instantly.

13. A double clutch activation mechanism (1) according to claim 1, **characterized in that** one side of the first motion transmitter (11) is connected with the first groove (8.3.1) located in the first force transmitter (8.3) and the other part of it is connected with the first spring (6), also one part of the second motion transmitter (12) is connected with the second groove (8.4.1) located in the second force transmitter (8.4) and the other part of it is connected with the second spring (7).

14. A double clutch activation mechanism (1) according to claim 4, **characterized in that** the cam (8.2.1) moves the first motion transmitter (11) in the axial direction when the rotary element (8.2) overlaps the first force transmitter (8.3) during its rotation around its own axis, moves the second motion transmitter (12) in the axial direction when it overlaps the second force transmitter (8.4).

15. A double clutch activation mechanism (1) according to claim 1, **characterized in that** the actuator (8) has a rotary element (8.2) on which there is a cam (8.2.1) and that makes rotation connected to the driving element (9) via gears (8.2.2), also the cam (8.2.1) on it moves by following a circular route and when it is aligned with the first force transmitter (8.3) and the second force transmitter (8.4) connected to transmission body, moving only one of the first force transmitter (8.3) and the second force transmitter (8.4) with which it is aligned, by virtue of its cam (8.2.1).
